# EUROPEAN PATENT APPLICATION

(11) **EP 2 330 822 A1**
(43) Date of publication of application: **08.06.2011**
(21) Application number: 09816205.0
(22) Date of filing: 25.09.2009
(51) Int. Cl.: H04N 7/173, H04N 5/76, H04N 5/765, H04N 5/91

(54) **MOVING IMAGE REPRODUCTION DEVICE AND MOVING IMAGE REPRODUCTION METHOD**

(30) Priority: 29.09.2008 JP 2008250626
(71) Applicant: Sharp Kabushiki Kaisha, Osaka-shi, Osaka 545-8522 (JP)
(72) Inventor: YAGI, Ryouta, Osaka-shi, Osaka 545-8522 (JP); KATAYAMA, Michita, Osaka-shi, Osaka 545-8522 (JP); OHASHI, Masanao, Osaka-shi, Osaka 545-8522 (JP)
(74) Representative: Müller - Hoffmann & Partner
(86) International application number: PCT/JP2009/066665
(87) International publication number: WO 2010/035790

(57) **Abstract**

[Object]

An object is to provide a motion picture reproducing apparatus allowing a user to easily select a desired motion picture from a large number of motion pictures.

[Solution]

A terminal 300 having a motion picture reproducing function is for reproducing a motion picture distributed on demand, and it includes: a display device on which the motion picture is displayed; a motion picture reproducing unit 303, a still image drawing unit 310, a graphic output unit 308 and a video output unit 305, for displaying meta information related to the distributed motion picture on the display device superposed on the motion picture that is being reproduced; an input receiving unit 309 receiving an input operation by a user; and a screen transition control unit 306 and display description reproducing unit 307, for switching display of the meta information related to the distributed motion picture, in accordance with the user input.

## Description

### TECHNICAL FIELD

The present invention relates to a motion picture reproducing technique and, more specifically, to a technique for assisting a user in selecting a desired motion picture from a plurality of distributed motion pictures.

### BACKGROUND ART

Development of high-speed networks utilizing optical lines and the like has made VOD (Video-On-Demand) service increasingly popular. The VOD service distributes motion pictures to equipment such as a television receiver (hereinafter simply referred to as a "TV") through a network, in response to a demand from a user.

When a user uses the VOD service, the user selects a desired motion picture through hierarchical operation including genre selection, content list display and content selection, or through a search operation including search keyword input, search result list display and content selection. The operation procedure is much complicated as compared with the conventional operation of selecting a TV broadcast program. Therefore, for a user accustomed only to the conventional TV broadcast, the VOD service is difficult to use.

Patent Document 1 discloses a technique to solve this problem. According to the technique, a VOD server arranges content of a plurality of motion pictures in a prescribed order to a list structure, which is distributed to a receiving terminal. In accordance with an operation of a channel up/down buttons or channel number buttons of a remote controller (hereinafter simply referred to as a "remote") of the receiving terminal, motion picture content is reproduced in the designated order.

According to the technique described in Patent Document 1, by the operation of remote of the receiving terminal, VOD video content can be viewed easily through a user interface similar to TV broadcast.
Patent Document 1: Japanese Patent Laying-Open No. 2008-193284

### DISCLOSURE OF THE INVENTION

### PROBLEMS TO BE SOLVED BY THE INVENTION

The apparatus described in Patent Document 1, however, has the following problem. Specifically, the content of motion pictures as the object of selection is arranged in the form of a list. If the number of motion pictures as the object of selection is large, the user must repeat operations of remote until he/she reaches the desired content.

Further, in the apparatus described in Patent Document 1, a distribution request is issued to the VOD server immediately in response to an operation of selecting a channel by the remote. Therefore, at every operation, there arises a wait time to get the motion picture.

Therefore, it is preferable to provide motion picture reproducing apparatus and motion picture reproducing method that allow the user to easily select a desired motion picture from a plurality of motion pictures.

### MEANS FOR SOLVING THE PROBLEMS

According to a first aspect, the present invention provides a motion picture reproducing apparatus reproducing a motion picture distributed on demand, including: a display device; display means for displaying meta information related to the distributed motion picture superposed on a motion picture that is being reproduced; input receiving means for receiving an input operation by a user; and switching means, responsive to an input from the input receiving means, for switching display of meta information related to the distributed motion picture.

Preferably, the motion picture reproducing apparatus further includes reproducing means, responsive to selection of the meta information related to motion picture by the input receiving means, for reproducing and displaying on the display device the motion picture corresponding to the selected meta information.

More preferably, the display means displays in accordance with screen description including layout of a motion picture and layout of meta information related to the motion picture.

More preferably, the screen description further includes layout of a motion picture list screen arranging all of or part of pieces of meta information related to distributed motion pictures along two axes in accordance with time-sequential order relation of the distributed motion pictures and distribution channels of the distributed motion pictures. The input receiving means includes selection input means for moving a cell as an object of selection upward, downward, to the left or to the right for selection. The display means displays a motion picture list screen arranging all of or some of pieces of meta information related to selectable motion pictures along the two axes, superposed on a motion picture that is being reproduced, in accordance with the screen description. The switching means includes means, responsive to an input from the selection input means, for selecting a motion picture corresponding to the meta information selected by the selection input means, from the pieces of meta information of motion pictures arranged and displayed on the motion picture list screen.

The switching means may include means, responsive to an input from the selection input means, for switching and displaying meta information of a motion picture to be displayed superposed on the motion picture in the same order as when inputs for moving upward, downward, to the left and to the right are made on the motion picture list screen.

Preferably, the screen description further includes layout of a program display screen displaying meta information of a motion picture that is being reproduced. The display means includes means for displaying the program display screen on an area, different from the meta information of motion picture displayed superposed on the motion picture, superposed on the motion picture that is being reproduced, in accordance with the screen description.

More preferably, the screen description further includes layout of an operation guidance display screen for displaying a method of input operation. The display means displays the operation guidance display screen superposed on the motion picture that is being reproduced, in accordance with the screen description.

More preferably, the motion picture reproducing apparatus further includes re-displaying means for re-displaying the operation guidance screen if an input is made by the input receiving means when the operation guidance display screen is not displayed.

The display means may be adapted to display the meta information related to motion picture, if an input to switch meta data related to motion picture is made by the input receiving means while the meta information related to motion picture is erased.

According to a second aspect, the present invention provides a method of reproducing a motion picture distributed on demand, including the steps of: reproducing and displaying a motion picture on a display device; displaying meta information related to the distributed motion picture superposed entirely or partially on a motion picture that is being reproduced, on the display device; receiving an input operation by a user; and switching, in response to an input received at the input receiving step, display of the meta information related to the distributed motion picture.
According to a third aspect, the present invention provides a computer program that causes a computer to function to realize all steps of the motion picture reproducing method described above.
According to a fourth aspect, the present invention provides a server that distributes screen description including layout of a motion picture and layout of meta information related to the motion picture.

### EFFECTS OF THE INVENTION

As described above, the display means displays the meta information related to the distributed motion picture superposed partially or entirely on the motion picture that is being reproduced, and the display of meta information of the distributed motion picture is switched in accordance with an input operation by the user. Therefore, it is possible for the user to switch and check pieces of information related to a large number of motion pictures while watching a motion picture that is being reproduced. If there is any motion picture the user wants to watch, he/she may select the corresponding meta information, to start reproduction of the motion picture. Since the motion picture layout and the layout of meta information display are both described in the screen description, searching of meta information and motion picture reproduction can be done in flexible layout. Once a piece of meta information is displayed and the piece of meta information is selected, the corresponding motion picture is displayed. Since there is enough time after the meta information is displayed until it is selected, the motion picture can be obtained in this time period, and hence, the time after an instruction to reproduce a motion picture is issued until reproduction of the motion picture actually starts can be reduced.

As a result, the present invention provides a reproducing apparatus that allows the user to easily select a desired motion picture from a large number of motion pictures.

### BRIEF DESCRIPTION OF THE DRAWINGS

Fig. 1 is a schematic illustration of screen definition description.
Fig. 2 shows an exemplary display based on the screen description.
Fig. 3 shows an exemplary display of a list screen based on the screen description.
Fig. 4 is a functional block diagram of a terminal 300.
Fig. 5 is a flowchart representing execution of the screen description for reproduction.
Fig. 6 is a flowchart representing execution of the display description for reproduction.
Fig. 7 shows an exemplary display of motion picture information related to a selection candidate.
Fig. 8 shows a selection candidate indication of the motion picture that is currently a selection candidate.
Fig. 9 shows an exemplary display of a motion picture list screen.
Fig. 10 shows an example of the motion picture list.
Fig. 11 shows an example of transition of selection candidate motion picture information.
Fig. 12 shows an example of transition of selection candidate motion picture information.
Fig. 13 shows an example of transition of selection candidate motion picture information.
Fig. 14 shows another example of transition of selection candidate motion picture information.
Fig. 15 shows, in enlargement, a part of the the screen shown in Fig. 14.
Fig. 16 shows an example of transition of selection candidate motion picture information.
Fig. 17 shows an exemplary display when a motion picture selecting operation is made.
Fig. 18 shows an exemplary display after a motion picture selecting operation is made.
Fig. 19 shows an exemplary display when an invalid operation is made.
Fig. 20 shows an exemplary display after an invalid operation is made.
Fig. 21 shows an example of screen transition when a motion picture is being read.
Fig. 22 shows an example of the motion picture list of a different configuration.
Fig. 23 is an illustration showing an example of operation on the motion picture list shown in Fig. 22.
Fig. 24 is an illustration showing an exemplary display when a cursor down button is pressed on the motion picture list shown in Fig. 23.
Fig. 25 shows an exemplary display of a motion picture list containing a plurality of pages.
Fig. 26 shows an exemplary display of a motion picture list containing a plurality of pages.
Fig. 27 is a schematic illustration of a process for performing high-speed scrolling on the motion picture list display screen.

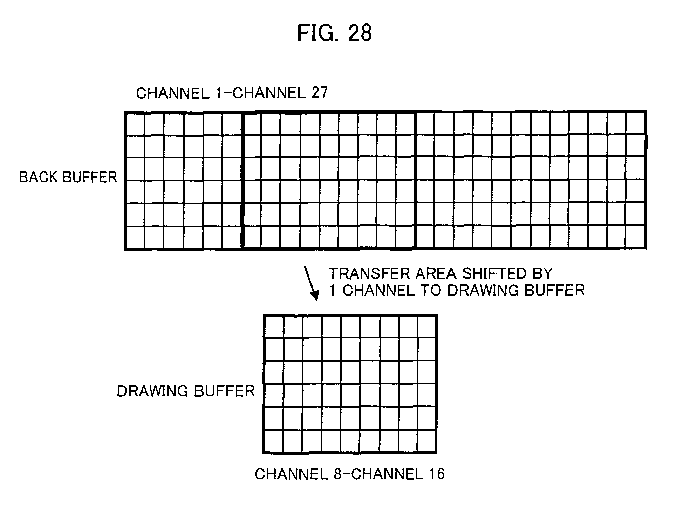

Fig. 28 is a schematic illustration of a process for performing high-speed scrolling on the motion picture list display screen.
Fig. 29 shows an exemplary display when a user registers a motion picture in "My Favorite Channel."
Fig. 30 shows an exemplary display after the motion picture is registered in "My Favorite Channel."
Fig. 31 shows an exemplary display of other services.
Fig. 32 shows an exemplary display of a news list.
Fig. 33 shows an exemplary arrangement of buttons on the remote.
Fig. 34 shows an example of display description.
Fig. 35 shows an example of a script description.
Fig. 36 shows an example of a layout description.
Fig. 37 shows an example of screen transition.

### DESCRIPTION OF THE REFERENCE SIGNS

- 101, 1801: screen transition
- 102: display description
- 103: still image content
- 104: meta information
- 201, 206, 1001, 1201, 1202: screen
- 202: still image
- 203: character
- 204: graphic image
- 205: motion picture
- 301: communication unit
- 302: storage unit
- 303: motion picture reproducing unit
- 304: audio output unit
- 305: video output unit
- 306: screen transition control unit
- 307: display description reproducing unit
- 308: graphic output unit
- 309: input receiving unit
- 310: still image drawing unit
- 311: remote
- 602: operation guide display
- 604: channel number
- 605: channel logo
- 606: title name
- 607: channel name
- 608: proprietor name
- 701: motion picture list
- 706: cursor frame
- 805: button display
- 1101: display
- 1205, 1206: motion picture selecting screen
- 1601: cursor up button
- 1602: cursor down button
- 1603: cursor left button
- 1604: cursor right button
- 1605: ENTER button
- 1701: display description
- 1702: layout description portion
- 1703: script description portion
- 1704, 1705, 1706, 1701: layout description
- 1708: registration description
- 1709: function definition

### BEST MODES FOR CARRYING OUT THE INVENTION

In the present embodiment, as an example of the motion picture reproducing apparatus, a TV that can use the VOD service will be described. In the following description and in the drawings, the same components are denoted by the same reference characters. Their names and functions are also the same. Therefore, detailed description thereof will not be repeated.

### <About Screen Description>

In the present specification, "screen description" refers to data including display description of each screen of a prescribed format such as SVG (Scalable Vector Graphics) defining arrangements of motion pictures, still images, graphic images and character sequences to be displayed on a screen, as well as definition of screen transition that occurs as a result of any operation by a remote or the like on each screen. The motion picture reproducing apparatus generates screen display based on a result of analysis of the screen description.

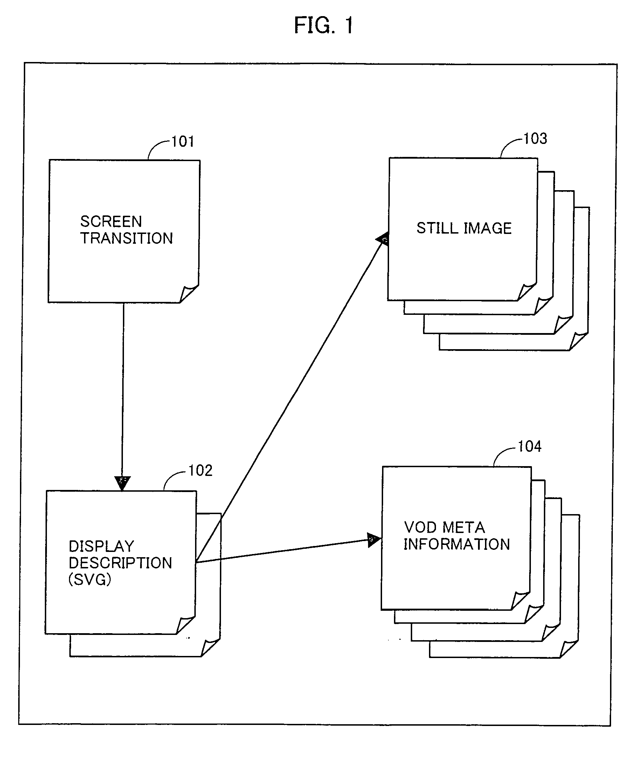

Referring to Fig. 1, the screen description in accordance with the present embodiment includes: still image content 103 such as JPEG (Joint Photographic Experts Group) and PNG (Portable Network Graphics) displayed on the screen; and VOD meta information 104 including URI (Universal Resource Identifier) for accessing a VOD server and reproducing motion picture and information of an encryption key and the like.

The screen description includes display description 102. Display description 102 includes reference information to refer to still image content 103 and VOD meta information 104, and designates layout of motion picture, still images, character sequences and graphic images to be displayed on the screen, such as display coordinates on the screen, size, order of layers, and transparency. Display description 102 includes information of a method of display update when a user makes an input operation, and script description designating a screen transition request.

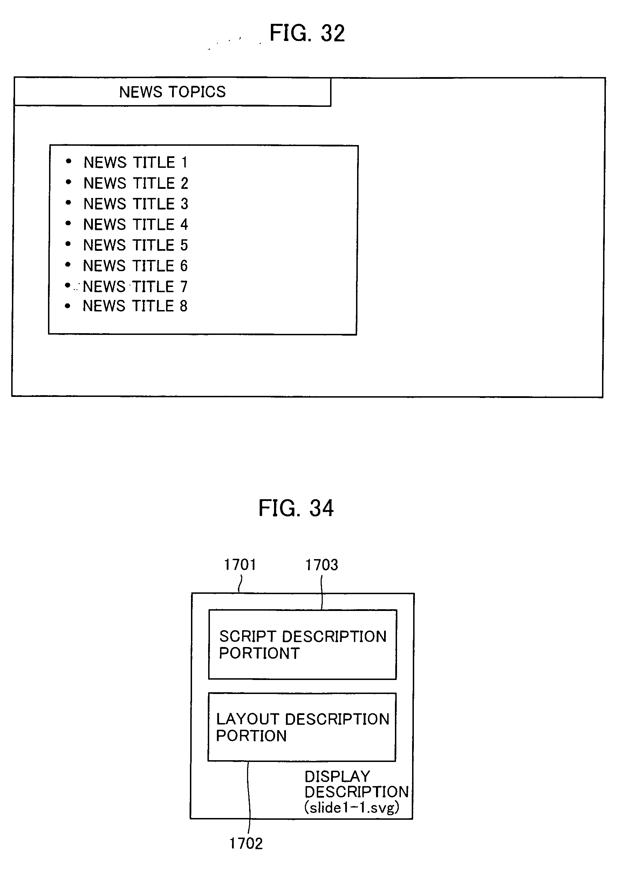

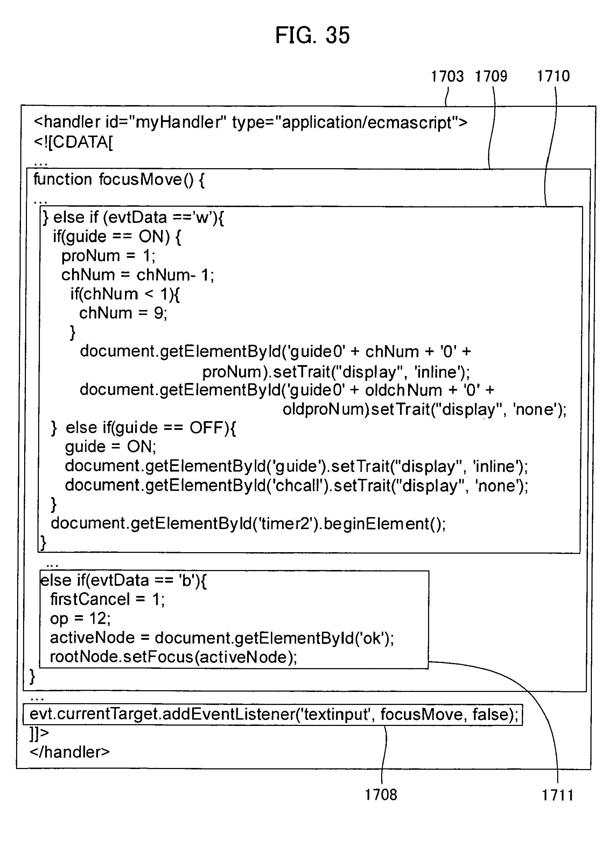

Referring to Figs. 34 to 36, display description 1701 is an example of display description 102, and it includes layout description portion 1702 and script description portion 1703.

Layout description portion 1702 includes a motion picture layout description 1704, a still image layout description 1705, a character layout description 1706, and a graphic image layout description 1707.

Motion picture layout description 1704 includes: motion picture reproducing coordinates (x = "0" y = "0"), reproducing size (width = "1920" height = "1080") and reference information to the motion picture meta information ("video.cpc?LID = none").

Still image layout description 1705 includes: still image display coordinates (x = "90" y = "924"), display size (width = "1740" height = "89"), and reference information to still image file (xlink:href = "guide_3ch.jpg").

Character layout description 1706 includes: character display coordinates (x = "430" y = "965"), character display color (fill = "#FF00FF"), character font size (font-size = "30") and the character sequence ("Title 1") to be displayed.

Graphic image layout description 1707 includes graphic image type (rect), still image display coordinates (x = "60" y = "904"), display size (width = "1800" height = "176"), filling color (fill = "#000000") and transparency setting (osd-opacity = "0.5") for combining the motion picture and the graphic.

Script description portion 1703 includes: a function definition 1709 instructing a collection of processes; and a registration description 1708 designating execution of the process of function definition 1709 when the remote is operated.

Function definition 1709 includes, by way of example, a process 1710 when the cursor up key is pressed (block of else if(evtData= "w")), and a process 1711 when BLUE button is pressed (block of else if(evtData= "b")).

In the process 1710 when the cursor up key is pressed, index of meta information of motion picture that is to be displayed is updated (chNum = chNum-1), and based on the updated index, the display on the screen is updated (decoment.getElementByld ('guide0' + chNum + '0' + proNum).setTrait("display", incline')).

In the process 1711 when the BLUE button is pressed, a variable for controlling the next transition screen is set (firstCancel = 1;op = 12;), and transition to the next screen is requested (rootNode.setFocus(activeNode)).

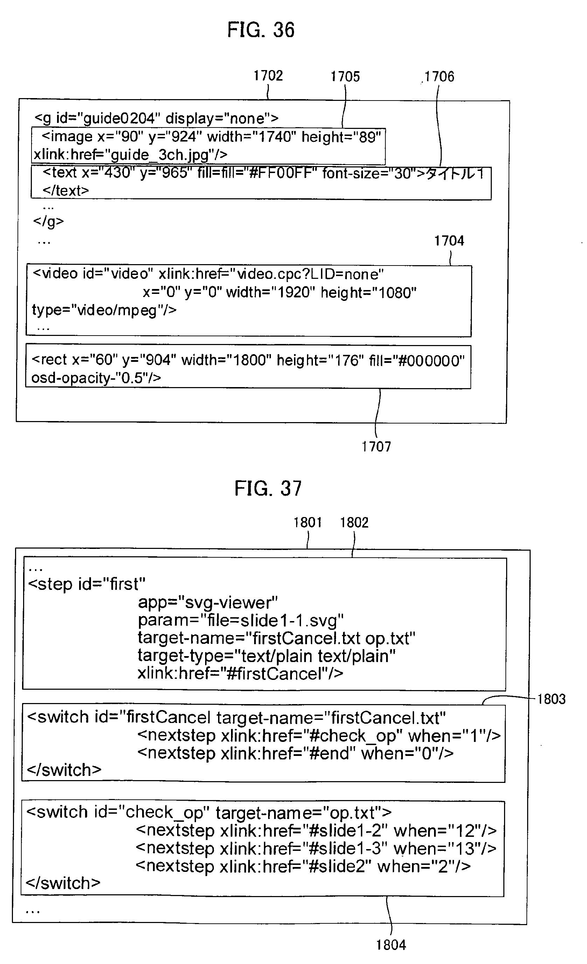

Referring to Fig. 37, screen transition 1801 is an example of screen transition 101, and it includes a screen display process 1802 and processes 1803 and 1804 for determining the next transition screen.

Screen display process 1802 designates a file name (param= "file=slide1-1.svg") of the display description, and a script variable name (target-name= "firstCancel.txt op.txt") to be used for determining the next screen transition.

The process 1803 for determining the next transition screen determines the next process in accordance with the value of script variable firstCancel.txt. If the value of script variable firstCancel.txt is "1", transition is made to the process 1804 for determining the transition screen having the identifier "check_op", and if the value of firstCancel.txt is "0", transition is made to a process, not shown, having an identifier "end".

The process 1804 for determining the next transition screen determines the next process in accordance with the value of script variable op.txt.

If the value of script variable opt.txt is "12", transition is made to a process, not shown, having an identifier "slidel-2", if the value of op.txt is "13", transition is made to a process, not shown, having an identifier "slide 1-3" and, if the value of op.txt is "2", transition is made to a process, not shown, having an identifier "slide2".

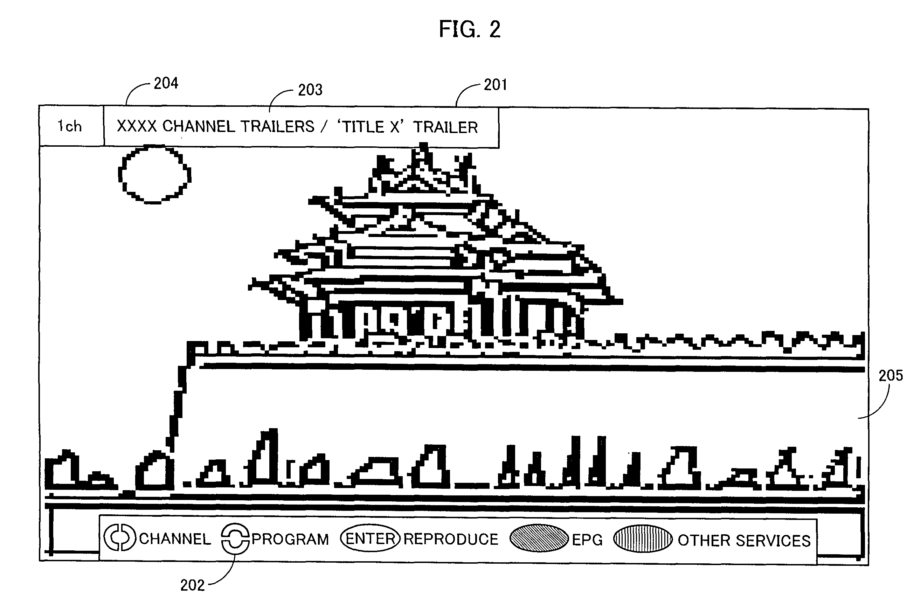

Referring to Fig. 2, exemplary display screen 201 based on display description 1701 includes motion picture 205 displayed on the entire screen, and a still image 202, characters 203 and graphic images 204 displayed superposed on motion picture 205. Still image 202, characters 203 and graphic images 204 are displayed at prescribed positions in prescribed display sizes. Still image 202, characters 203 and graphic images 204 are displayed combined with the motion picture on the background, in accordance with the transparency designated in the display description.

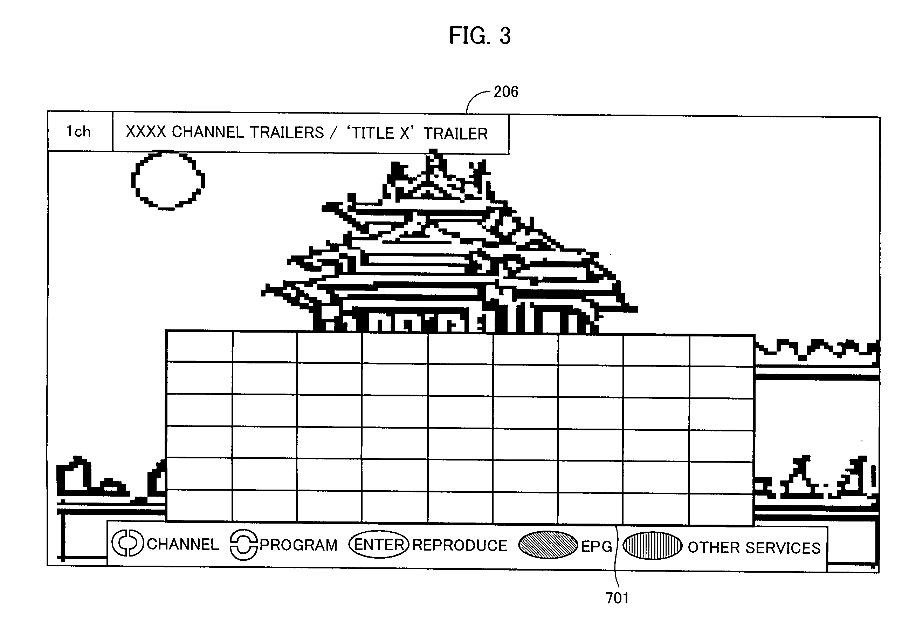

Referring to Fig. 3, an example of screen transition based on the description of screen transition 1801 will be described. Specifically, when "BLUE" button is pressed in the state in which the screen 201 shown in Fig. 2 is displayed, the display makes a transition to motion picture list screen 206 allowing selection of a desired motion picture from the displayed list of motion pictures. Motion picture list screen 206 includes a motion picture list 701 displayed semi-transparently on the motion picture. Details of motion picture list 701 will be described later. In Fig. 3, for clarity of drawings, the background of motion picture list 701 is made white. If "BLUE" button or "RETURN" button is pressed on list screen 206, the display makes a transition to screen 201 of Fig. 2.

The process when "BLUE" button is pressed while screen 201 is displayed will be described with reference to Figs. 34 and 37.

Screen 201 is displayed based on display description 1701, in screen display process 1802. If "BLUE" button is pressed while screen 201 is displayed, the process 1711 for when BLUE button is pressed is executed, firstCancel =1 and op=12 are designated, and the screen display process 1802 of screen 201 is completed. Control makes a transition to process 1803 for determining the next transition screen. Since firstCancel = 1 is set, control makes a transition to the process 1804 having the identifier "check_op". Since op = 12 is set in the process 1804 for determining the next transition screen, control makes a transition to the process, not shown, having the identifier "slide 1-2", and screen 206 is displayed.

### [Functional Block Diagram]

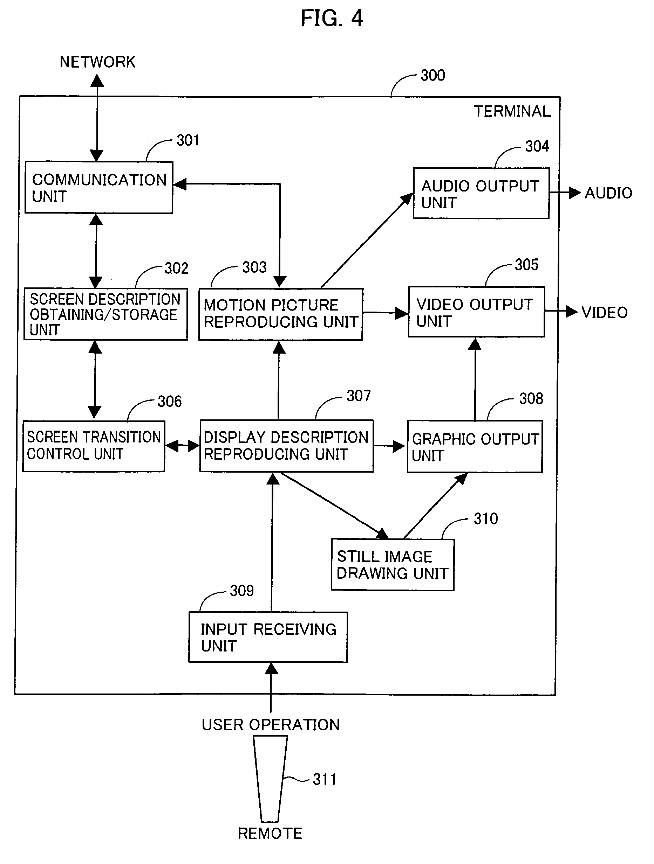

Referring to Fig. 4, TV terminal 300 that can use the VOD service in accordance with the present embodiment includes: a communication unit 301 connected to a network; a screen description obtaining/storage unit 302 for obtaining and storing screen description from a screen description server, not shown, through the network; a screen transition control unit 306 analyzing the screen description stored in screen description obtaining/storage unit 302 and designating a display description to be displayed next, based on the screen transition description; a motion picture reproducing unit 303 communicating with an encryption key server through communication unit 301 to generate a decryption key necessary for reproducing motion picture, communicating with the VOD server as needed through communication unit 301 for obtaining motion picture stream data, and conducting decryption and decoding, thereby to output video data and audio data; a display description reproducing unit 307, analyzing the display description received from screen transition control unit 306 and instructing motion picture reproducing unit 303 to reproduce VOD motion picture included in the screen display, by designating VOD meta information, reproducing position and size; an input receiving unit 309 receiving an input from a remote 311 and applying it to display description reproducing unit 307; a still image drawing unit 310 for reproducing a still image in accordance with the reproducing position and size designated by display description reproducing unit 307; a graphic output unit 308 for drawing characters and graphic images in accordance with drawing instruction about the characters and graphic images included in the screen display, applied from display description reproducing unit 307; an audio output unit 304 receiving sound from the motion picture reproducing unit and reproducing sound; and a video output unit 305 receiving motion picture from motion picture reproducing unit 303 and receiving still image and graphic image of a specific figure from graphic output unit 308 for displaying a video.

Communication unit 301 communicates with a screen description server, not shown, through a network and obtains screen description. Further, communication unit 301 communicates with a VOD server and an encryption key server, both not shown, to obtain data necessary for reproducing a motion picture.

Screen description obtaining/storage unit 302 obtains and stores the screen description through communication unit 301 in response to a request from screen transition control unit 306.

Motion picture reproducing unit 303 analyzes the VOD meta information provided from display description reproducing unit 307, communicates with the encryption key server through communication unit 301 and generates a decryption key necessary for reproducing the motion picture. Thereafter, the unit communicates with the VOD server as necessary through communication unit 301 to obtain motion picture stream data, decrypts and decodes the same, and outputs video data to video output unit 305 and outputs audio data to audio output unit 304.

Audio output unit 304 reproduces sound through a speaker, from the audio data output from motion picture reproducing unit 303.

Video output unit 305 superposes an image output from graphic output unit 308 on the video image output from motion picture reproducing unit 303, and displays the result on a screen of, for example, a liquid crystal display.

Screen transition control unit 306 analyzes the screen description obtained from screen description obtaining/storage unit 302 and, based on the screen transition description, designates the display description for the next display and instructs display description reproducing unit 307 to display. Further, when screen display by display description reproducing unit 307 ends, screen transition control unit 306 determines the display description to be displayed next, and makes a transition of the display screen.

Display description reproducing unit 307 analyzes the display description received from screen transition control unit 306, and instructs motion picture reproducing unit 303 to reproduce the VOD motion picture included in the screen display, designating the VOD meta information, reproducing position and size. Further, display description reproducing unit 307 instructs still image drawing unit 310 to reproduce the still image included in the screen display, designating the reproducing position and size. Further, display description reproducing unit 307 instructs graphic output unit 308 to draw characters and graphic images included in the display screen. Display description reproducing unit 307 updates screen display and makes a request of screen transition to screen transition control unit 306, based on a result of processing of a remote key input from a user, received through input receiving unit 309.

Graphic output unit 308 combines outputs from display description reproducing unit 307 and still image drawing unit 310 to generate a bit map display, which is output to video output unit 305.

Still image drawing unit 310 decodes image format of JPEG or PNG to generate a bit map display, and outputs it to graphic output unit 308.

Input receiving unit 309 receives an input operation by the user through remote 311, and provides it to display description reproducing unit 307.

Remote 311 transmits an input operation by the user realized by pressing a button to input receiving unit 309 by wireless communication such as infrared communication or Bluetooth (registered trademark).

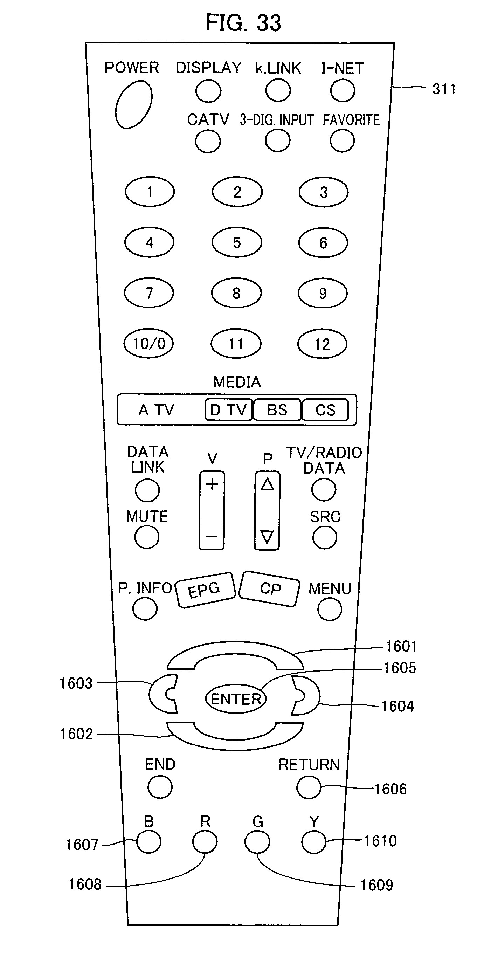

Referring to Fig. 33, remote 311 includes a cursor up button 1601, a cursor down button 1602, a cursor left button 1603 and a cursor right button 1604, for moving the cursor up, down, to the left and to the right on the screen.

Remote 311 further includes an ENTER button 1605 for selecting a graphic image, still image or the like on the screen, and a RETURN button 1606 for cancelling an operation.

Remote 311 further includes a BLUE button 1607, a RED button 1608, a GREEN button 1609 and a YELLOW button 1610, to which different functions are allocated screen by screen.

### [Operation]

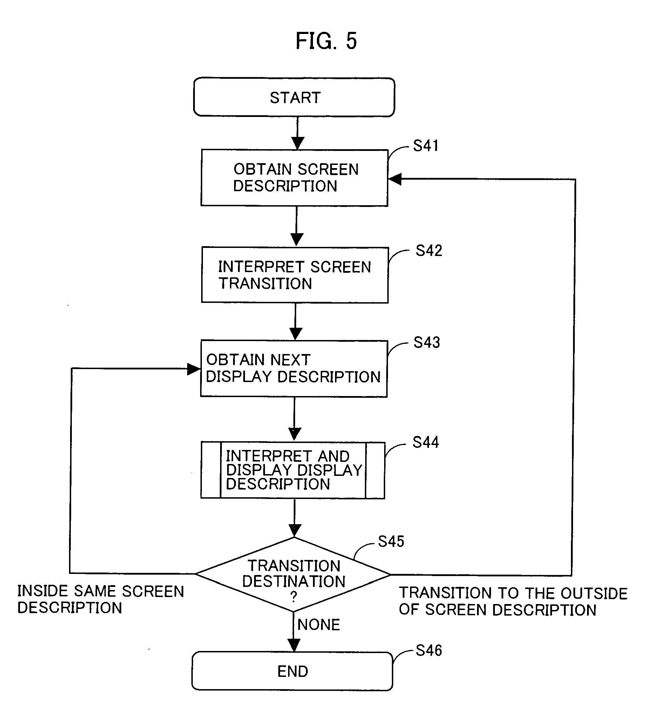

Fig. 5 shows a flowchart when a motion picture and a user interface for selecting a motion picture are to be displayed on a TV that can use the VOD service.

When display of a screen is requested, screen transition control unit 306 designates URI and requests screen description obtaining/storage unit 302 for the screen description for reproducing a prescribed motion picture. Screen description obtaining/storage unit 302 finds out whether the screen description having the prescribed URI has already been stored in itself. If such a screen description is not stored, screen description obtaining/storage unit 302 obtains the screen description having the prescribed URI from the screen description server through communication unit 301, stores the screen description in itself and returns the screen description to screen transition control unit 306 (step S41).

Screen transition control unit 306 interprets the screen description returned from screen description obtaining/storage unit 302 (step S42), obtains a file of the next display description included in the screen description (step S43), and requests display description reproducing unit 307 to reproduce the motion picture in accordance with the display description. Display description reproducing unit 307 interprets the display description, and displays the motion picture, still image, characters and graphic images superposed on the screen (step S44; details will be described later).

Screen transition control unit 306 receives a display end notice of a screen from display description reproducing unit 307 and, in response, it determines the next destination of screen transition (step S45). If the next destination of screen transition is included in the same screen description, control proceeds to step S43, and the process for the next display description takes place. If the next destination of screen transition is in a different screen description, control proceeds to step S41, and the screen description is obtained. If the next destination of screen transition does not exist, the process ends (step S46).

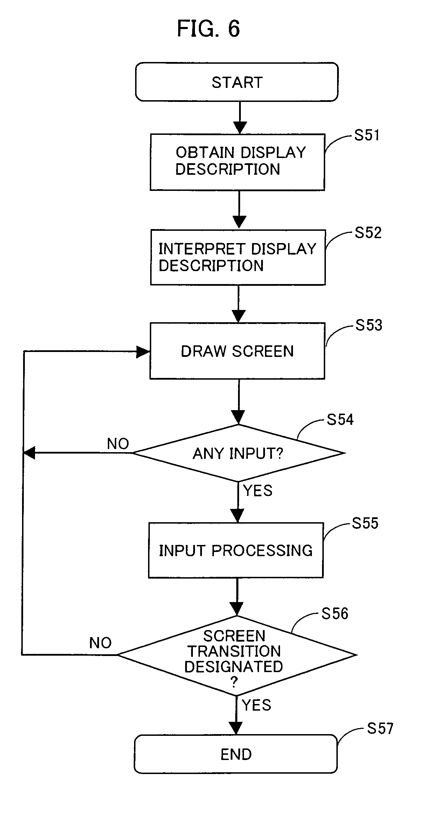

Next, the flow when display description reproducing unit 307 interprets the display description and generates screen display at step S44 of Fig. 5 will be described with reference to Fig. 6.

Referring to Fig. 6, display description reproducing unit 307 obtains a file of the display description designated by screen transition control unit 306 (step S51), interprets the display description, and generates a data structure for display, holding attributes such as display coordinates, size, reference file and the like of motion picture, still image, character sequence and graphic images to be displayed on the screen (step S52).

Based on the data structure for display, display description reproducing unit 307 issues a drawing request to motion picture reproducing unit 303 and still image drawing unit 310, whereby screen display is generated (step S53).

Display description reproducing unit 307 determines whether or not there is an input from the user through input receiving unit 309 (step S54). If there is no input, control proceeds to step S52 at which drawing is updated as the time passes. If there is an input, data structure for the display is updated to reflect the cursor movement, display switching and the like corresponding to the input (step S55).

Display description reproducing unit 307 determines whether or not a screen transition is designated by the input process (step S56). If screen transition is not designated, control proceeds to step S52, at which drawing is updated reflecting the result of the input process. If screen transition is designated, information for designating the next destination of transition is given to screen transition control unit 306 (step S57), and the process ends.

In the following, exemplary screen displays for selecting a motion picture in the TV structure that can use the VOD service in accordance with the present embodiment will be described.

### [Navigation Bar]

In a TV that can use the VOD service, when an operation to reproduce a motion picture is made, for example, when a link transition designating motion picture content from an HTML (HyperText Markup Language) browser is made or a VOD start button on a remote is pressed, screen transition control unit 306 is activated with the URI of screen description including the motion picture designated, and reproduction of the motion picture starts.

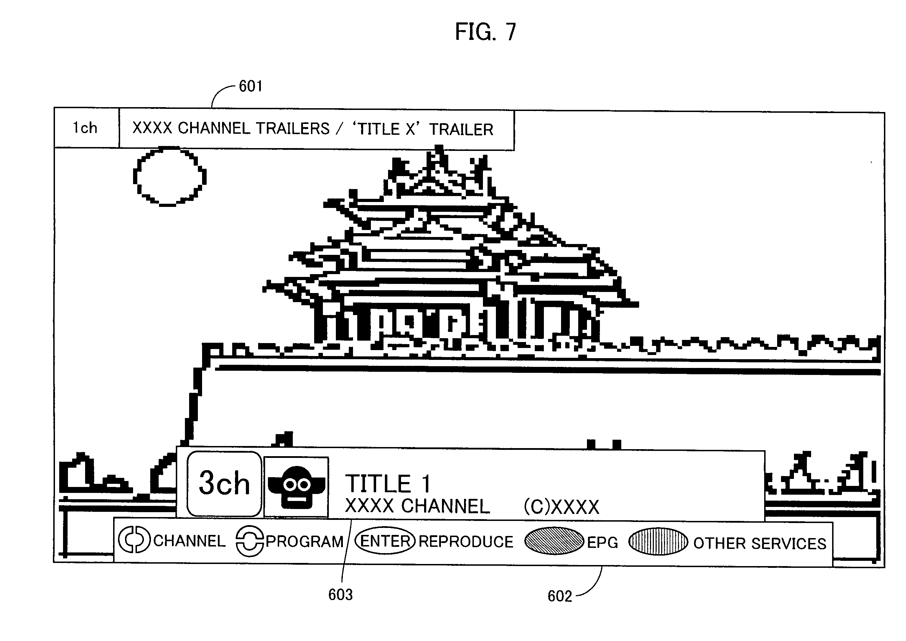

Referring to Fig. 7, the motion picture reproducing screen includes display of the motion picture, a navigation bar 601, a guidance 602, and a selection candidate display 603. Though not shown for clarity of drawing in Fig. 7, on the background of selection candidate display 603, the motion picture is displayed in semi-transparent manner.

Navigation bar 601 displays channel number (as will be described later) and title name of the motion picture that is being reproduced. Navigation bar 601 makes it possible for the user to constantly confirm the information of the motion picture that is being reproduced.

Guidance 602 is a display illustrating buttons on the remote that can be used for operation on the screen and their usage.

Selection candidate display 603 is a display related to a motion picture that is a current candidate of selection. Selection candidate display 603 includes channel number 604, channel logo 605, title name 606, channel name 607, and proprietor name 608. Selection candidate display 603 makes it possible for the user to confirm the information of the motion picture as the object of selection. In the following description and in the drawings, description such as "Channel 3/Title 1" refers to a character sequence of a title name 606 of a certain motion picture of a third channel. The number following "Title" refers to the order of reproduction of the motion picture.

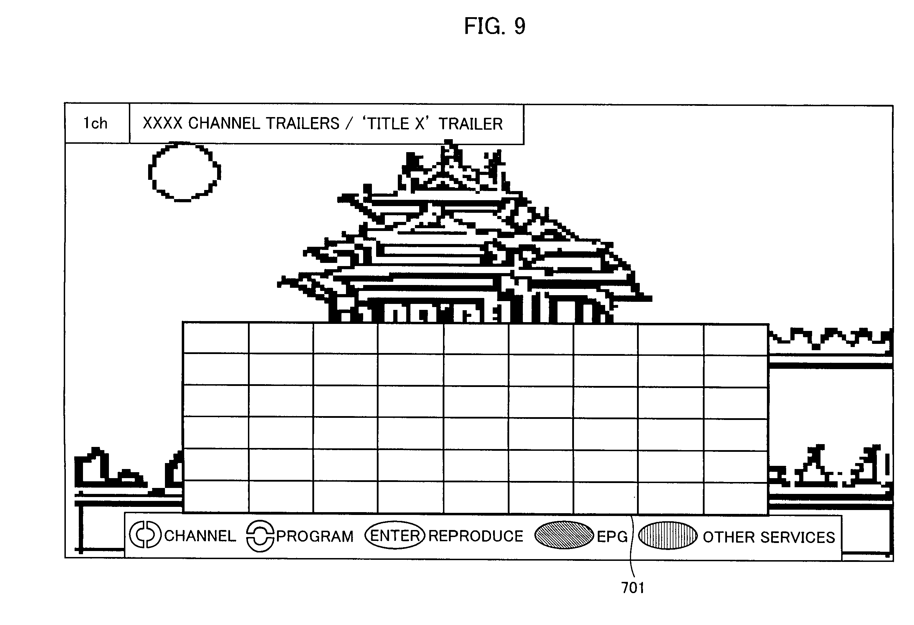

Fig. 9 shows an exemplary display of a motion picture list screen. As already described above, the motion picture list screen includes motion picture list 701 displaying, in the form of a list, selection candidates of motion pictures. In Fig. 9, the portion where motion picture list 701 is displayed is made semi-transparent, and on the background, the motion picture that is being reproduced is displayed semi-transparently. In Fig. 9, however, for clarity of drawing, the semi-transparent display is omitted and the background is simply shown white.

Transition from the motion picture reproducing screen shown in Fig. 7 to the motion picture list screen is made when "BLUE button" allocated, for example, to a program table, is pressed. On motion picture list 701, motion pictures distributed by the VOD are arranged in the form of a two-dimensional table having channels on the abscissa and the order of reproduction on the ordinate.

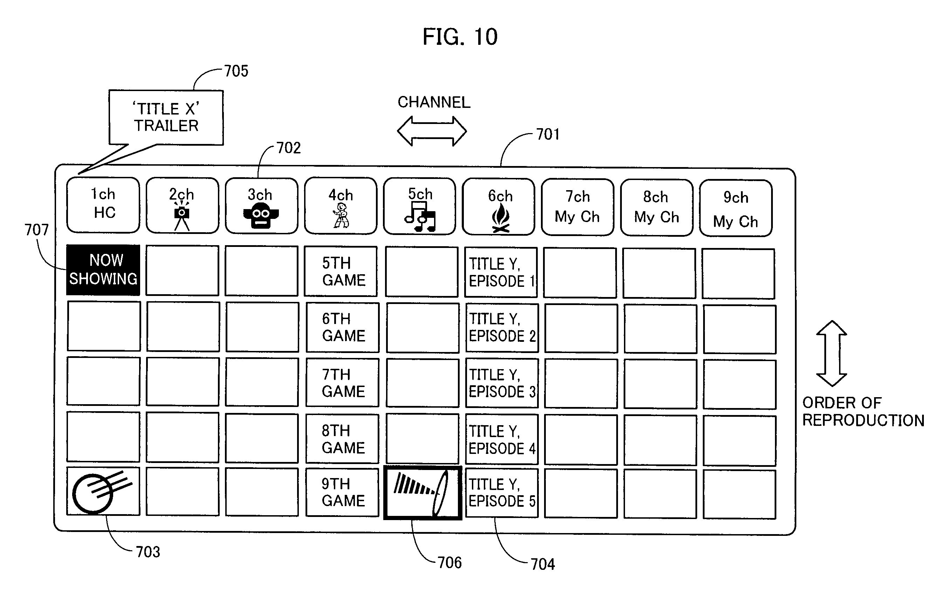

Referring to Fig. 10, on the first row of the table of motion picture list 701, channel boxes 702 describing channels are arranged. In each channel box 702, a channel number identifying the channel and an icon image of the channel are displayed. In Fig. 10 and in other figures, for clarity of drawings, only some icon images are shown in some cells, and icon images of most of the cells are omitted.

Here, the channel refers to a collection of motion pictures arranged in order as a list. The contents of a channel may be a collection of motion pictures held by a specific proprietor or a collection of a plurality of motion pictures related in contexts such as episodes of a drama or events of certain games. The channels may be customized user by user and organized individually for distribution. Alternatively, pieces of program information distributed from a VOD server may be individually organized to be arranged as a list for one channel, by the motion picture reproducing apparatus in accordance with the present invention.

The screen description server distributes screen description including definition of screen transition. The screen description designates in order the display descriptions that cause motion pictures included in the channel to be displayed in order. The TV obtains the screen description and, in accordance with the definition of screen transition, reads the display description designating reproduction of the first motion picture and reproduces the first motion picture. When reproduction of the first motion picture ends, the TV ends display of the first display description. Thereafter, the TV reads the display description designating reproduction of the second motion picture, and starts reproduction of the second motion picture. The TV repeats this process for the third and the following motion pictures. Thus, motion pictures distributed in the channel can be viewed one after another without necessitating any special operation of the user to select any motion picture.

The motion picture list screens shown in Figs. 9 and 10 are generated based on layout information including display coordinates, sizes and transparencies of still images, graphic images and character sequences designated by the display description included in the screen description distributed by the screen description server.

Among the cells of lower five rows of the table of motion picture list 701, some (for example, cell 703) have thumbnail images displayed to represent the motion picture included in the channel. By a selecting operation of moving a cursor frame 706 to a thumbnail image through cursor button operation, the program to be reproduced can be switched.

Others (for example, cell 704) among the cells of the table of motion picture list 701 have title name and detailed description of the motion picture displayed, in place of the thumbnail image. The detailed description of the motion picture may be directly displayed on the cell as in the case of cell 704. Alternatively, the title name and the detailed description of the currently selected motion picture may be displayed separate from the table, for example in the form of a balloon 705 that appears when corresponding motion picture of cell 707 is displayed.

The thumbnail and title name and/or detailed description of the motion picture may be displayed in one cell.

The indication "NOW SHOWING" 707 in Fig. 10 indicates that the motion picture shown by the thumbnail image of the corresponding cell is currently being displayed. By this icon, the user can confirm the motion picture and the channel that the user is now watching.

In the state in which motion picture list 701 is displayed, it is possible to change the channel as an object of selection by moving the cursor in the lateral direction by pressing the cursor left/right button. By pressing the cursor up/down button, the motion picture as the object of selection in the channel can be changed. By pressing the ENTER button, display can be switched to the motion picture as the object of selection.

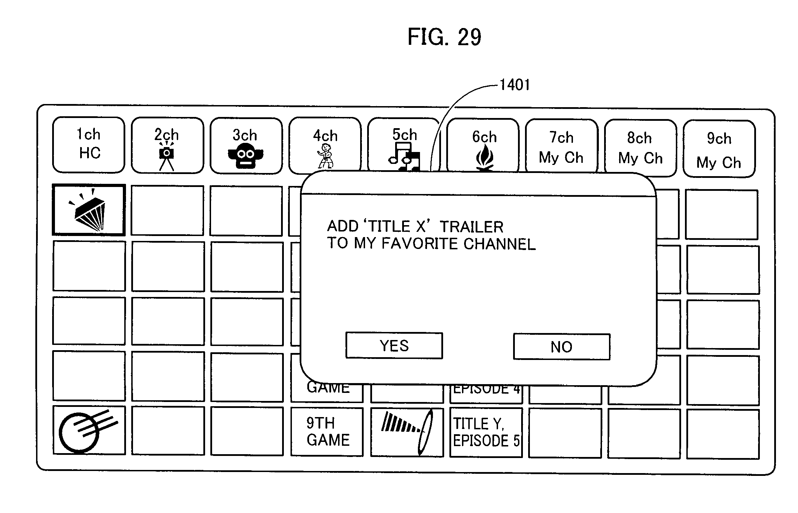

In the motion picture list display screen, it is possible for the user to add a preferred motion picture to a channel. Fig. 29 shows an exemplary screen when the user made a prescribed operation to add a motion picture. When a motion picture as the object of selection is changed through a cursor operation and the user presses, for example, the YELLOW button, a confirmation dialog 1401 appears. The dialog 1401 urges confirmation as to whether the motion picture as the object of selection is to be added to a specific channel. The channel to which the user can add a motion picture is, in the present embodiment, referred to as "My Favorite Channel". In the present embodiment, contents of My Favorite Channel are managed by the screen description server.

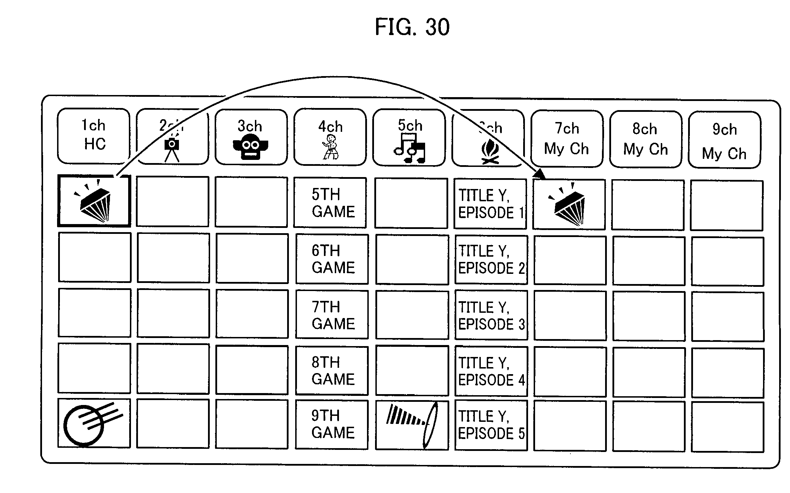

When the user performs the determining operation, the TV transmits the URI of the selected motion picture to the screen description server. The screen description server adds the motion picture selected by the user to the motion picture list, and transmits the screen description including the display description of the resulting motion picture list to the TV. The TV receives the updated screen description, and in accordance with the display description included in the screen description, displays the motion picture list display screen with the motion picture selected by the user added to My Favorite Channel, as shown in Fig. 30. In the example shown in Fig. 30, the first title of the first channel is added to the first cell of the seventh channel (My Favorite Channel).

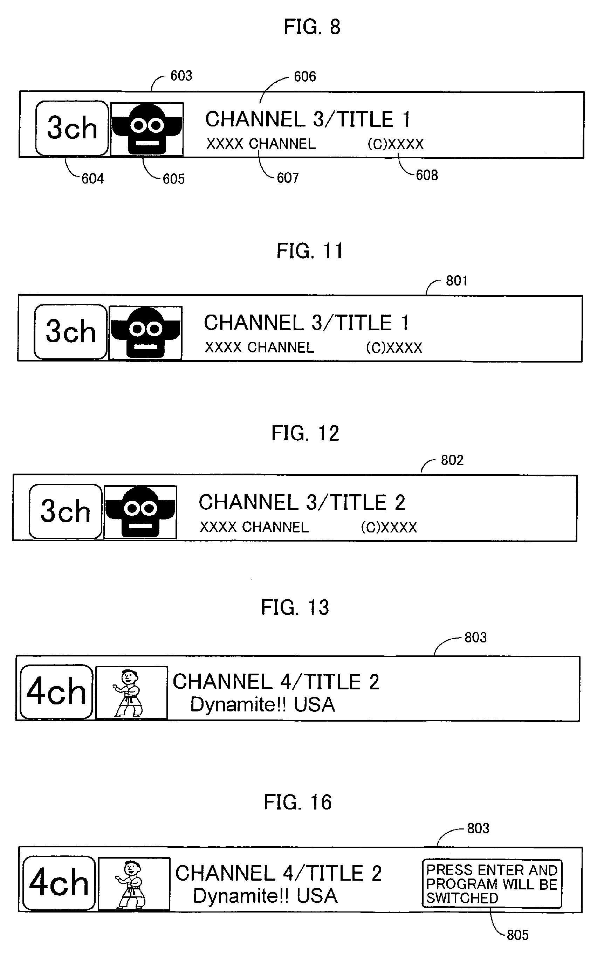

Figs. 11 to 16 show a display sequence when the motion picture display of selection candidate display 603 is switched, on the motion picture reproducing screen shown in Figs. 7 and 8.

Referring to Fig. 11, a motion picture display 801 is the initial display of the motion picture as selection candidate. The initial selection candidate may be a motion picture that was to be selected last time, or it may be the motion picture that is currently being displayed. In Fig. 11, the selection candidate is "Channel 3/Title 1".

When the user presses the cursor down button while motion picture display 801 is being displayed, the motion picture of selection candidate is switched to the next motion picture display 802 of the same channel, as shown in Fig. 12. In motion picture display 802, the selection candidate is "Channel 3/Title 2".

Further, when the user presses the cursor right button while motion picture display 802 is being displayed, the motion picture of selection candidate is switched to the motion picture display 803 of the same order of the next channel, as shown in Fig. 13. In motion picture display 803, the selection candidate is "Channel 4/Title 2".

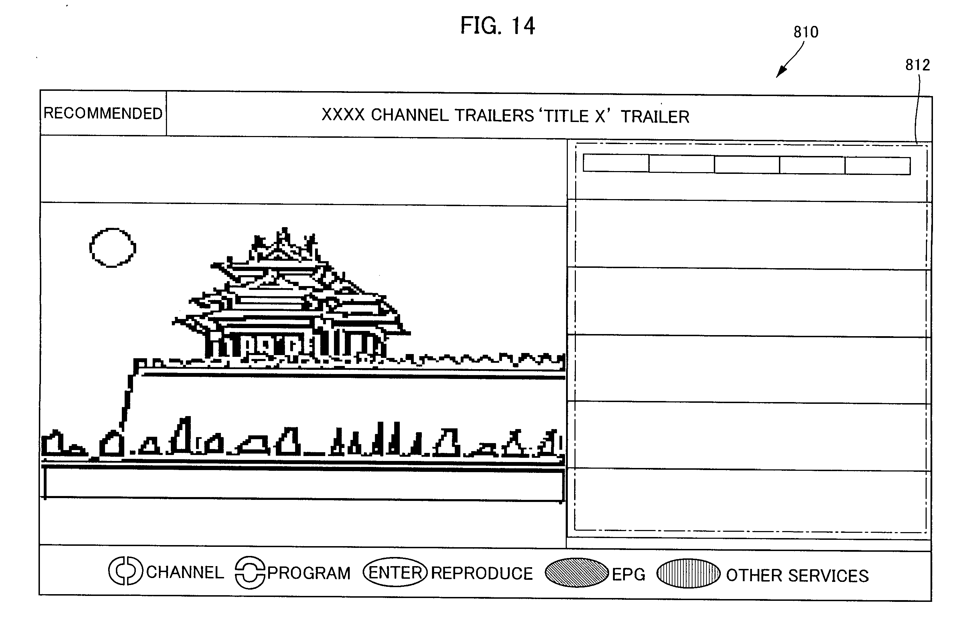

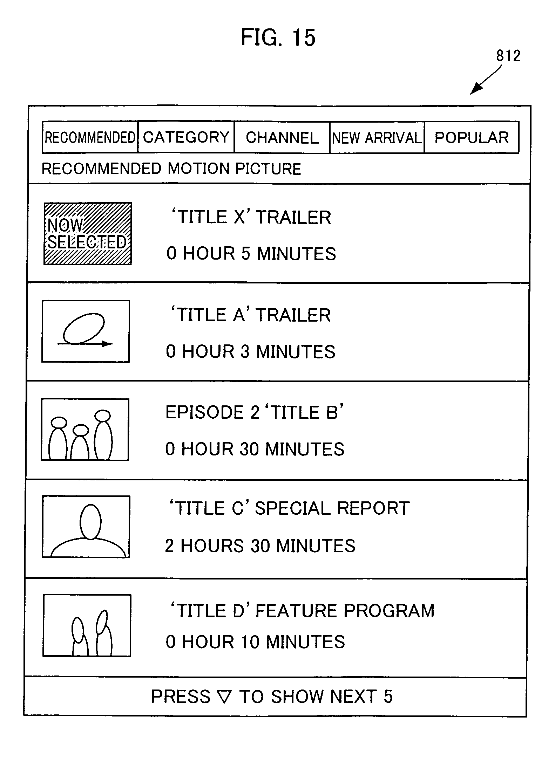

If one second passes without any operation after motion picture display 803 is displayed, a button display 805 of "Press ENTER and program will be switched" is additionally displayed as shown in Fig. 16. If ENTER button is pressed while button display 805 is being displayed, the motion picture can be switched.
Alternatively, as shown in Figs. 14 and 15, motion picture list screen 810 may only show a list 812 of selectable channels and motion pictures of the channel that is currently being selected, rather than all motion pictures. In this configuration, by moving the cursor in the lateral direction by pressing the cursor left/right button, the channel as the object of selection is changed and, in response, motion picture list 812 of the displayed channel is switched.

If ten seconds pass without any operation after motion picture display 803 is displayed, navigation bar 601, guidance 602 and selection candidate display 603 shown in Figs. 7 and 8 are erased. Thus, only the display of motion picture remains.

With this screen configuration, the operation for selecting a motion picture while a motion picture is being reproduced can be made similar to the operation for selecting a motion picture using the list screen. Therefore, the user can easily select a motion picture.

While the user is making any operation, information related to the motion picture that is currently being reproduced is displayed on navigation bar 601. Therefore, advantageously, the user can constantly confirm the contents of the motion picture that is currently being reproduced.

In the above-described series of operations, it follows that the user selects a motion picture after confirming the display of the motion picture. Therefore, delay in operation resulting from connection to the VOD server can be reduced as compared with the method of directly switching the motion picture by channel switching operation.

The time until selection candidate display 603 (Fig. 8) is erased may be changed in accordance with the motion pictures. By way of example, if the motion picture is a trailer of a pay-program, the motion picture of selection candidate display 603 may not be erased but continuously displayed. If an already purchased pay-program is being reproduced, the motion picture display of selection candidate display 603 may be erased in a short period of time, or the display may not be given at all.

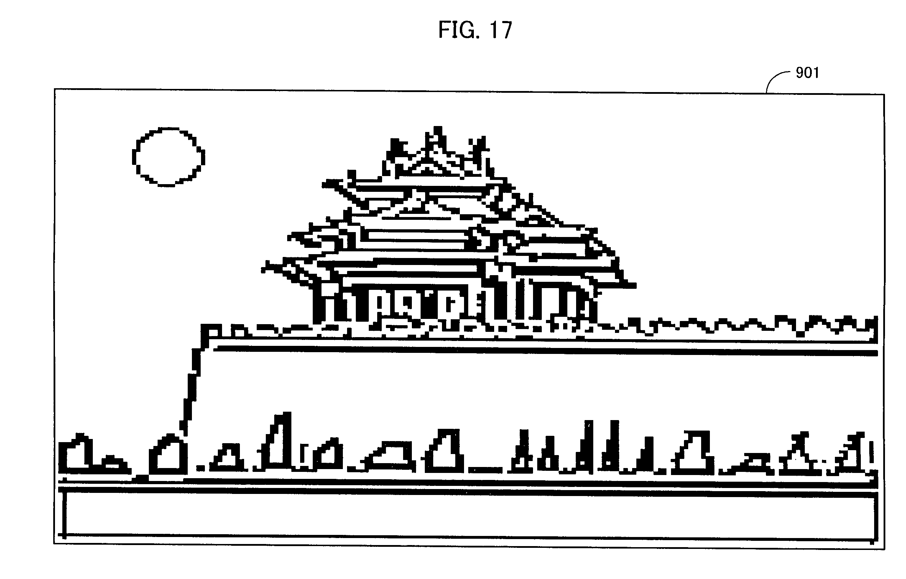

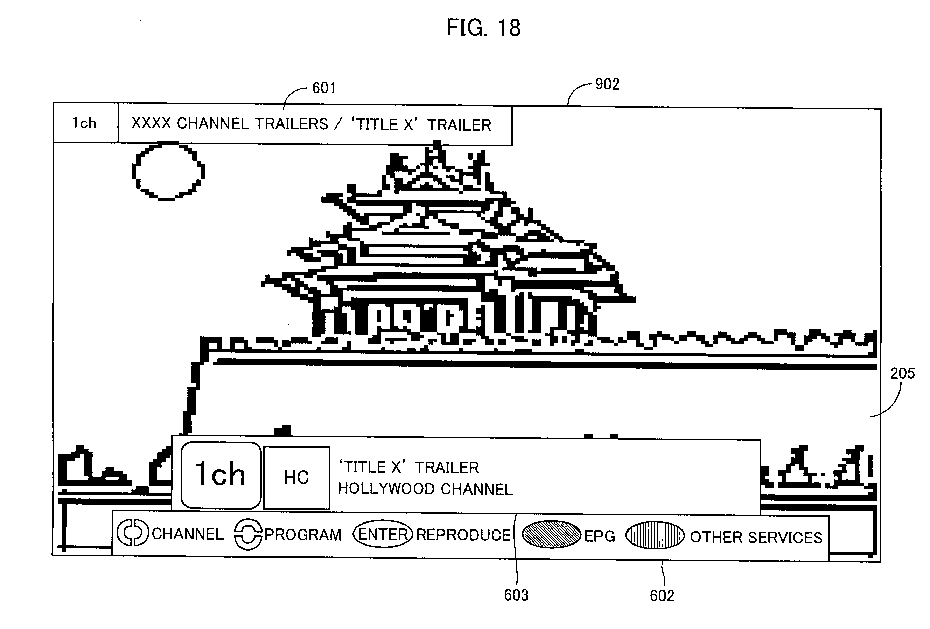

Figs. 17 to 22 show screen displays when a motion picture selecting operation is done while a motion picture is being reproduced. Referring to Fig. 17, assume that a screen 901 displaying only the motion picture is displayed on the TV. In this state, if the user performs an operation of selecting a motion picture, that is, if the user presses the cursor up/down/left/right button and then presses ENTER button, transition to a screen 902 shown in Fig. 18 occurs. On screen 902, navigation bar 601 of the motion picture that is being reproduced, guidance 602, and selection candidate display 603 related to a motion picture as a selection candidate are displayed. Though it is not shown in Fig. 18 for clarity of drawing, selection candidate display 603 is semi-transparent, and the motion picture on the background can be seen.

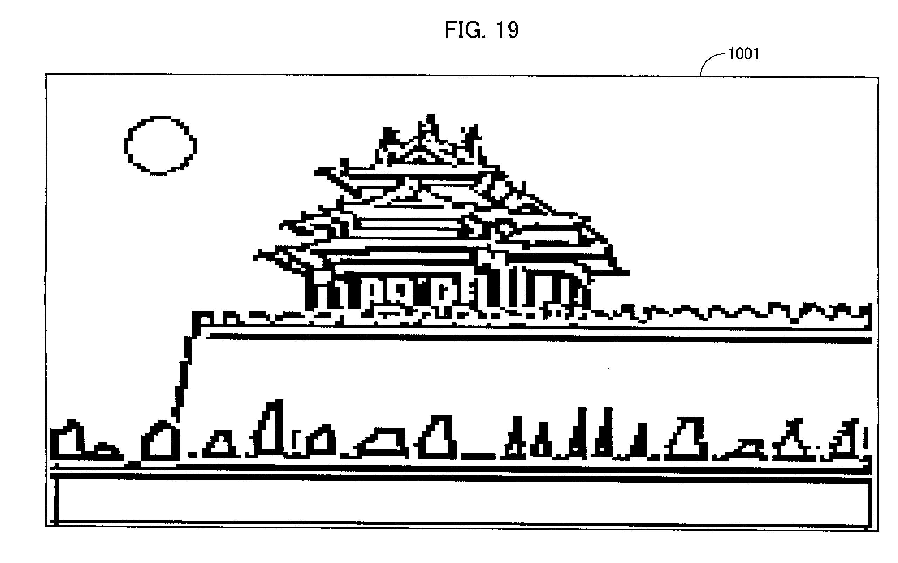

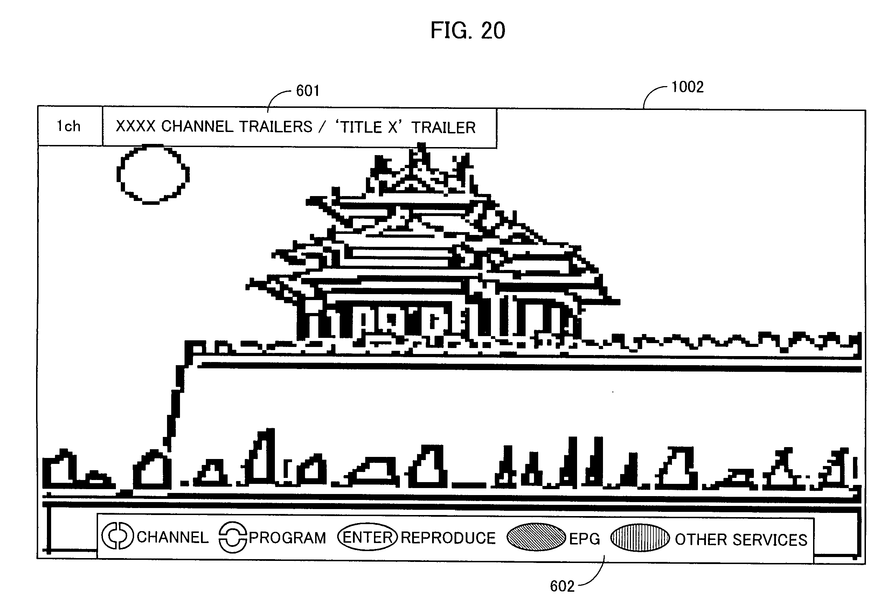

Referring to Fig. 19, assume that an invalid remote button operation is made on a screen 1001 displaying only a motion picture. In that case, as shown on a screen 1002 of Fig. 20, only navigation bar 601 of the motion picture that is being reproduced and guidance 602 are displayed, and selection candidate display 603 related to a motion picture as a selection candidate is not displayed.

With this configuration, it is possible to immediately display a user interface for selecting a motion picture if the user wishes to switch the motion picture, and if not, to provide the operation method for selecting a motion picture by displaying the operation guide.

In the present embodiment, when the cursor left/right button is operated, a motion picture of the same order of the next or previous channel is selected. The present embodiment, however, is not limited to such an embodiment.

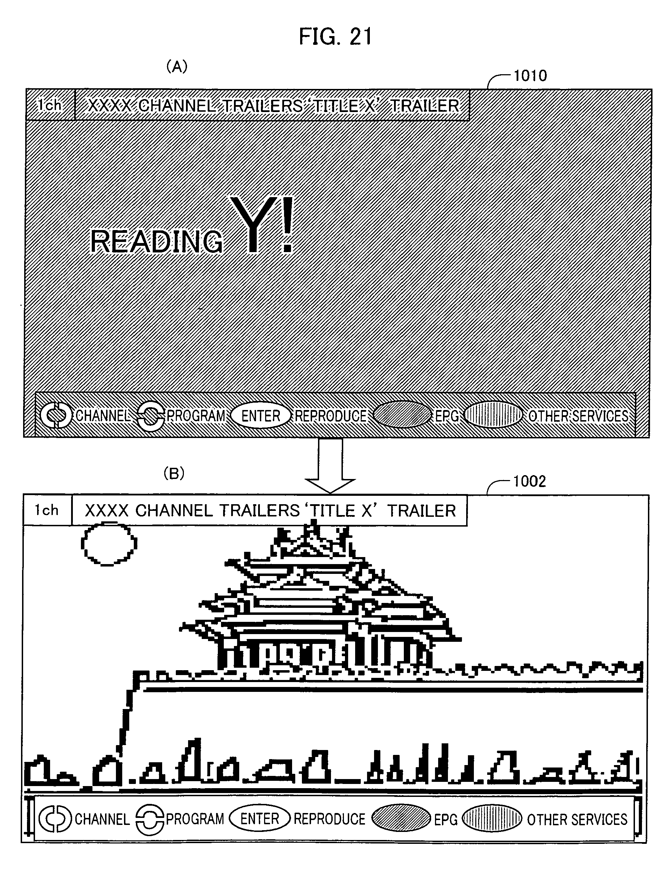

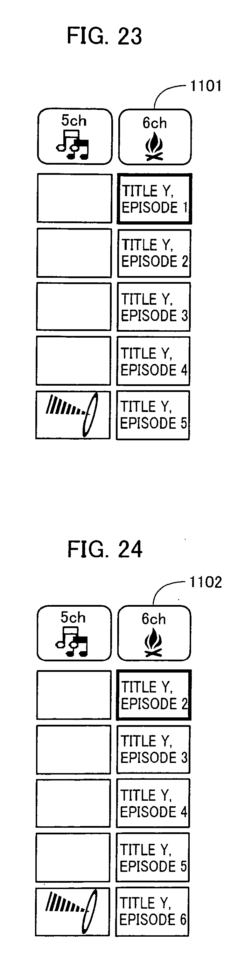

By way of example, Figs. 21 to 24 show display transitions when the TV is adapted to select a current motion picture of the next or previous channel if the cursor left/right button is operated. In these figures, again, some of the icon displays and the like of each cell of motion picture display are omitted.
As shown in Fig. 21(A), a still image 1010 indicating that a motion picture is being read may be displayed until a screen 1002 (Fig. 21 (B)) of the switched-in motion picture appears. By such an approach, the user can easily recognize the waiting state waiting for reading of the motion picture.

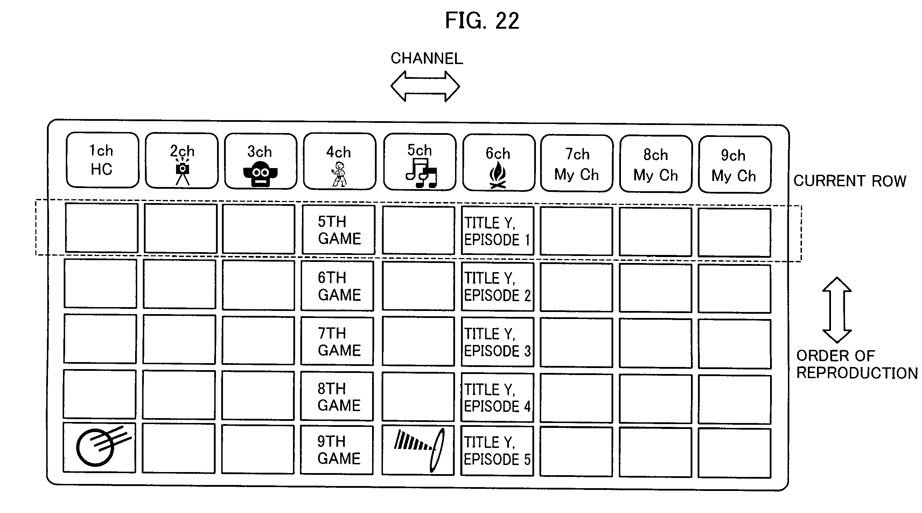

Referring to Fig. 22, in the motion picture list, current motion pictures are arranged on the first row of the matrix of motion picture list. In this example, if a cursor up/down operation is done, the cursor frame is fixed on the first row while the display position of motion pictures is shifted up/down one by one. By way of example, if the cursor frame is moved to a display 1101 of Channel 6 and cursor down button is operated, each of the second and following motion pictures moves upward by one, so that the motion picture that has originally been on the second cell of the channel becomes the current motion picture of the current channel. If the cursor left/right button is operated, the cursor frame moves to the left or right on the first row, allowing selection of a current motion picture.

With this configuration also, the operation for selecting a motion picture while a motion picture is being reproduced can be made similar to the operation for selecting a motion picture using the list screen, thus making the operation standardized. Therefore, the user operation can be simplified.

In a TV that can reproduce VOD, if it is possible by user setting to switch the ordinate/abscissa setting of the list display, the ordinate/abscissa setting may be reflected on the motion picture selecting operation while a motion picture is being reproduced, to realize similar and uniform motion picture selecting operation.

### [Method of Switching List Display]

In the foregoing, configurations of motion picture list display screens in which motion pictures of a finite number of channels are displayed as selection candidates have been discussed. The present invention, however, is not limited to such an embodiment. For instance, it is possible to handle a larger number of channels.

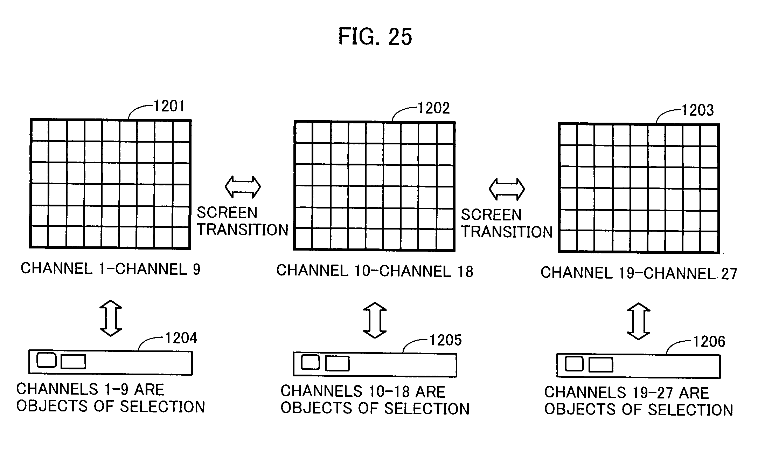

Fig. 25 shows an example of motion picture list display screen handling a large number of channels. Referring to Fig. 25, a screen 1201 displays a list of motion pictures of Channel 1 to Channel 9. The screen shows a matrix of 6 rows x 9 columns, representing a list of motion pictures of Channel 1 to Channel 9, in order from the left. On this screen 1201, assume that a motion picture of Channel 1 (the leftmost column) is selected. If the cursor right button is pressed in this state, a motion picture of Channel 2 is selected. If the cursor right button is pressed again, a motion picture of Channel 3 is selected. By repeating the operation of pressing the cursor right key, eventually, a motion picture of Channel 9 is selected. If the cursor right key is further pressed with a motion picture of Channel 9 being selected, transition to a screen 1202 displaying a list of motion pictures of Channel 10 to Channel 18 occurs. Similarly, if the cursor right button is pressed with a motion picture of Channel 18 on the rightmost side of screen 1202 being selected, transition to a screen 1203 displaying a list of motion pictures of Channel 19 to Channel 27 occurs.

Assume that on screen 1202 displaying the motion pictures of Channels 10 to 18, "RETURN" button is pressed. Here, the screen display returns to a motion picture selection screen 1205 during motion picture reproduction. On motion picture selection screen 1205, similar to screen 1202, motion pictures of Channels 10 to Channel 18 are the selection candidates. Similarly, if the display returns from screen 1203 displaying the list of motion pictures of Channel 19 to Channel 27 to a motion picture selection screen 1206 given during motion picture reproduction, motion pictures of Channel 19 to Channel 27 are the selection candidates. If the display returns from screen 1202 displaying the list of motion pictures of Channel 1 to Channel 9 to a motion picture selection screen 1204 given during motion picture reproduction, Channel 1 to Channel 9 are the selection candidates.

Since the channels that are the selection candidates on the motion picture list display screen are reflected on the channels of motion picture selection candidates while a motion picture is being reproduced, the motion picture selecting operation can be made similar and uniform. Further, as regards the operation of moving the cursor to the left/right, the cursor frame may be fixed on the first column and the display position of a channel may be shifted one by one to the left/right.

The display descriptions of respective screens of the motion picture list display screens may all be included in a single screen description, or display descriptions may be divided for a certain number of screens and stored in separate screen descriptions, and the descriptions may be integrated after obtained.

If the approach is taken in which display descriptions are divided for a certain number of screens and stored in separate screen descriptions, and the descriptions are integrated after obtained, a screen description including a display description of a screen as the destination of next transition may be obtained in advance and stored in screen description obtaining/storage unit 302, whereby the time for the process of switching to the motion picture list display screen can be made shorter. Details of this process are disclosed in Japanese Patent Laying-Open No. 2008-65806.

### [Narrowing-Down]

The arrangement of channels displayed on the motion picture list display screen described above may be switched in accordance with a user operation.

Assume that a user made specific button operations in a state in which a screen 1207 displaying a list of motion pictures is displayed. Here, the display may be switched to a screen 1208 of motion picture list having a channel arrangement including only the channels of a specific genre, to a screen 1209 of motion picture list having a channel arrangement including newly added motion pictures, or to a screen 1210 of motion picture list having a channel arrangement customized for the individual user by a service provider.

In this manner, when channels as the selection candidates on a motion picture list display screen are changed, the change is reflected on the channels as motion picture selection candidates while a motion picture is being reproduced, whereby the motion picture selecting operation can be made similar and uniform.

### [Scroll]

As another method of realizing a motion picture list display screen handling a large number of channels, the display may be scrolled, and the channels included in the motion picture list display screen may be updated stepwise. For instance, in the example shown in Fig. 25, if a user presses the cursor right button or the cursor left button on a channel on the right end or left end of the matrix of motion picture list, the displayed contents may be moved to the right or to the left by 1 channel, and display of 1 channel may be newly inserted to the freed space.

In that case, preferably, graphic output unit 308 (see Fig. 4) is adapted to have a back buffer, which is a memory area not displayed on the screen, and a drawing buffer as a memory area that is displayed on the screen.

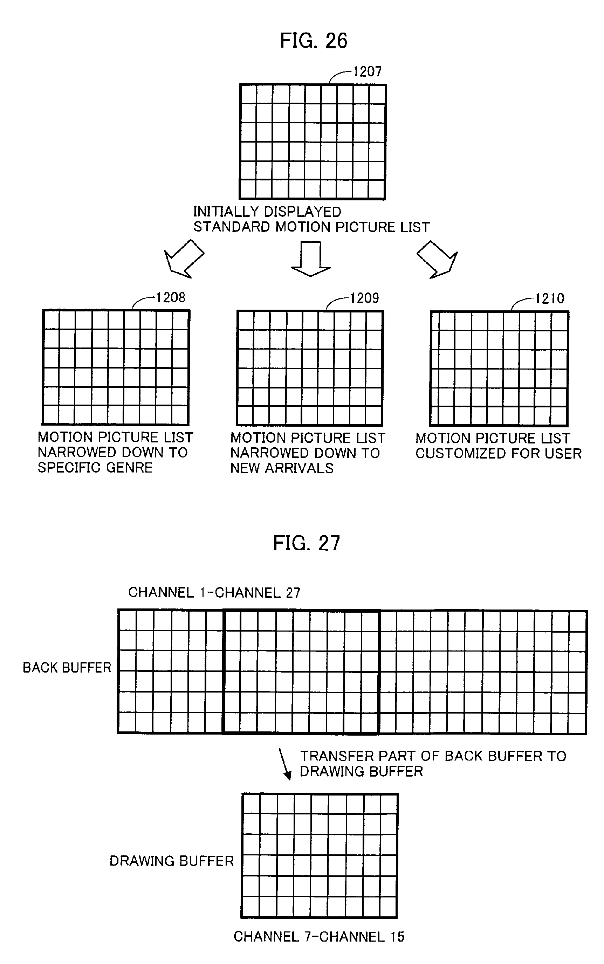

Referring to Fig. 27, displays of channels preceding and succeeding the motion picture list display screen are drawn in advance in the back buffer. If the user makes a scrolling operation in this state, coordinates of an area to be transferred from the back buffer to the drawing buffer are changed, so that the drawing is updated by scrolling.

This enables high-speed scroll drawing process for the motion picture list display screen.

Though configurations in which the user interface for selecting a motion picture is displayed superposed on a motion picture have been described above, a user interface for selecting content other than the VOD motion pictures may be displayed.

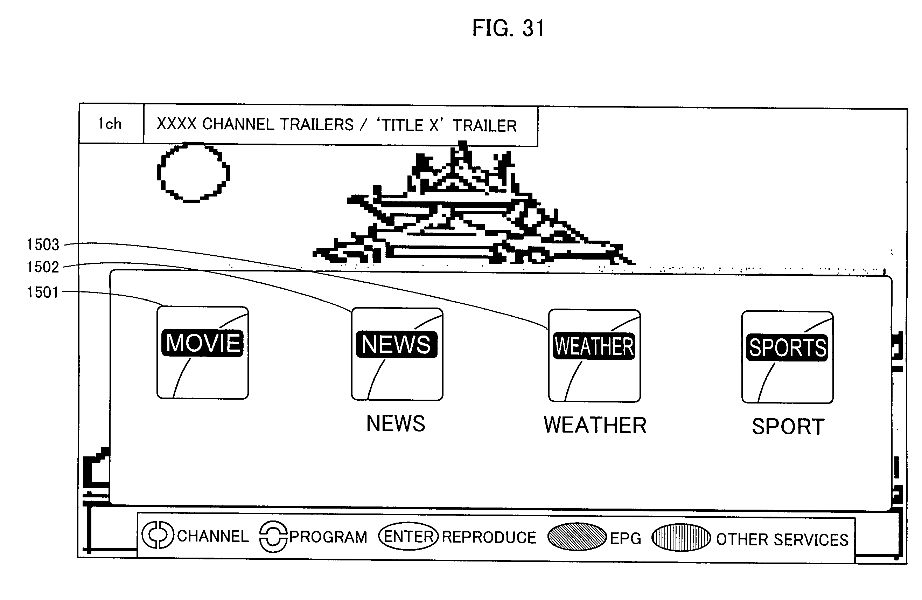

Fig. 31 shows an example of selecting other services from the motion picture reproducing screen. Referring to Fig. 31, assume that "RED button" for selecting another service is pressed on the motion picture reproducing screen. Here, on the motion picture that is being displayed, icons for selecting other services such as an icon 1501 for movie information, an icon 1502 for news, an icon 1503 for weather forecast are displayed. The user selects a desired icon by operating the cursor up/down/right/eft button, and presses the ENTER button. By this operation, a desired service can be selected. For instance, if icon 1502 for news is selected and the ENTER button is pressed in the state shown in Fig. 31, a list of news shown in Fig. 32 appears.

As described above, in accordance with the present embodiment, it is possible for the user to confirm meta information of a candidate motion picture to be displayed next, before the actual display. Therefore, there is an effect that the user can advantageously select a motion picture after confirming the contents of the motion picture to be selected.

In the present embodiment, selectable motion pictures are displayed in a two-dimensional list along the axis of time-sequential order of distribution and the axis of distribution channel. Therefore, there is a effect that the user can advantageously select a motion picture after viewing and confirming meta information of motion pictures.

According to the present embodiment, the operation input for selecting a motion picture using meta data display is similar to the operation using the list display and, therefore, there is an effect that the user can advantageously select a motion picture through familiar operations.

In the present embodiment, meta information related to the motion picture that is being reproduced is displayed on the screen. Therefore, there is an effect that the user can constantly confirm the meta information of the motion picture that is being reproduced. Further, since the operation guidance for displaying the method of input operation is displayed, there is an effect that the user can confirm the input operation to select a motion picture.

Further, according to the present embodiment, the operation guidance is displayed when an input operation is made. Therefore, when the user makes an erroneous input operation, he/she can confirm the correct operation.

In the present embodiment, if an input is made to select meta data related to a motion picture on a screen on which the meta data related to the motion picture is not displayed, the meta data related to the motion picture is displayed. Therefore, there is an effect that the meta data of a motion picture as a selection candidate can be confirmed without any additional operation, when the user is to select a motion picture.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### INDUSTRIAL APPLICABILITY

The present invention is applicable to an information providing system integrating broadcast and network.

## Claims

1. A motion picture reproducing apparatus reproducing a motion picture distributed on demand, comprising:
a display device;
display means for displaying meta information related to said distributed motion picture superposed on a motion picture that is being reproduced, on said display device;
input receiving means for receiving an input operation by a user; and
switching means, responsive to an input from said input receiving means, for switching display of meta information related to said distributed motion picture.

2. The motion picture reproducing apparatus according to claim 1, further comprising
reproducing means, responsive to selection of said meta information related to motion picture by said input receiving means, for reproducing and displaying on said display device the motion picture corresponding to the selected meta information.

3. The motion picture reproducing apparatus according to claim 1 or 2, wherein said display means displays in accordance with screen description including layout of a motion picture and layout of meta information related to the motion picture.

4. The motion picture reproducing apparatus according to claim 3, wherein
said screen description further includes layout of a motion picture list screen arranging all of or part of pieces of meta information related to distributed motion pictures along two axes in accordance with time-sequential order relation of the distributed motion pictures and distribution channels of the distributed motion pictures;
said input receiving means includes selection input means for moving a cell as an object of selection upward, downward, to the left or to the right for selection;
said display means displays a motion picture list screen arranging all of or some of pieces of meta information related to selectable motion pictures along the two axes, superposed on a motion picture that is being reproduced, in accordance with said screen description; and
said switching means includes means, responsive to an input from said selection input means, for selecting a motion picture corresponding to the meta information selected by said selection input means, from the pieces of meta information of motion pictures arranged and displayed on said motion picture list screen.

5. The motion picture reproducing apparatus according to claim 4, wherein said switching means includes means, responsive to an input from said selection input means, for switching and displaying meta information of a motion picture to be displayed superposed on said motion picture in the same order as when inputs for moving upward, downward, to the left and to the right are made on said motion picture list screen.

6. The motion picture reproducing apparatus according to any of claims 3 to 5, wherein
said screen description further includes layout of a program display screen displaying meta information of a motion picture that is being reproduced; and
said display means includes means for displaying the program display screen on an area, different from the meta information of motion picture displayed superposed on the motion picture, superposed on the motion picture that is being reproduced, in accordance with said screen description.

7. The motion picture reproducing apparatus according to any of claims 3 to 6, wherein
said screen description further includes layout of an operation guidance display screen for displaying a method of input operation; and
said display means displays the operation guidance display screen superposed on the motion picture that is being reproduced, in accordance with said screen description.

8. The motion picture reproducing apparatus according to claim 7, further comprising re-displaying means for re-displaying the operation guidance screen if an input is made by said input receiving means when the operation guidance display screen is not displayed.

9. The motion picture reproducing apparatus according to any of claims 1 to 8, wherein said display means displays the meta information related to motion picture, if an input to switch meta data related to motion picture is made by said input receiving means while said meta information related to motion picture is erased.

10. A method of reproducing a motion picture distributed on demand, comprising the steps of:
reproducing and displaying a motion picture on a display device;
displaying meta information related to said distributed motion picture superposed entirely or partially on a motion picture that is being reproduced, on said display device;
receiving an input operation by a user; and
switching, in response to an input received at said input receiving step, display of said meta information related to the distributed motion picture.

11. A computer program causing a computer to execute all steps according to claim 10.

12. A server distributing screen description including layout of a motion picture and layout of meta information related to the motion picture, to the motion picture reproducing apparatus according to any of claims 1 to 9.
